# EUROPÄISCHE PATENTSCHRIFT

(11) **EP 2 390 587 B1**
(45) Veröffentlichungstag und Bekanntmachung des Hinweises auf die Patenterteilung: **17.07.2019**
(21) Anmeldenummer: 11166698.8
(22) Anmeldetag: 19.05.2011
(51) Int. Cl.: F24C 7/08, F24C 15/00, A21B 3/04, F24C 15/32

(54) **GARGERÄT MIT EINER DAMPFERZEUGUNGSFUNKTION**
COOKING DEVICE WITH A STEAM GENERATION FUNCTION
APPAREIL DE CUISSON DOTÉ D'UNE FONCTION DE PRODUCTION DE VAPEUR

(30) Priorität: 27.05.2010 EP 10290283
(43) Veröffentlichungstag der Anmeldung: 30.11.2011
(73) Patentinhaber: BSH Hausgeräte GmbH, 81739 München (DE)
(72) Erfinder: Hoffmann, Olivier, 67120, Molsheim (FR); Steiner, Pierre, 67310, Wasselonne (FR)

(56) Entgegenhaltungen:
- EP-A1- 1 658 798
- DE-A1-102007 030 573
- DE-U1- 20 013 489
- DE-U1-202007 010 358
- US-A- 3 245 461
- US-A- 4 924 072
- US-A- 5 494 690

## Beschreibung

Die Erfindung betrifft ein Gargerät mit einer Dampferzeugungsfunktion.

US 4,924,072 offenbart eine Kombination aus einem Dampfofen und einem Trockenofen, welche einen integralen Boiler aufweist, der in der Ofenkavität positioniert ist. Der Kombinationsofen kann als ein Gebläsekonvektionsofen, als Zwangskonvektionsofen, der Heißdampf umwälzt, oder als ein Dampfgarer nahe der Siedetemperatur von Wasser betrieben werden. Sensoren in dem Ofen liefern Informationen an einen Mikroprozessor, der Heizelemente steuert, um eine Ofentemperatur innerhalb von ca. 5°C aufrechtzuerhalten. Der Ofen funktioniert mittels Umwälzens von Heißdampf über die Oberfläche des Boilers, welcher durch eine Blende vor Verschmutzung geschützt ist. Wasserstandssensoren in dem Boiler garantieren, dass der Wasserstand entweder innerhalb vorbestimmter Grenzen bleibt oder schaltet anderenfalls den Ofen ab, falls der Wasserstand die Grenzen überschreitet. Sensoren für eine Wassertemperatur in dem Boiler und eine Lufttemperatur in der Umluft ermöglichen die Steuerung einer relativen Feuchtigkeit, wenn der Ofen dazu verwendet wird, Teig zum Gehen zu bringen oder gegarte Speisen auf einer relativ niedrigen Temperatur zu halten. Eine Steuerung der Wassertemperatur in dem Boiler wird mittels eines Ablassens des Wassers und Ersetzens durch Kühlwasser erleichtert, falls die Temperatur zu hoch wird. Der Ofen mag allein stehen oder als eine Kombination von Einheiten aufeinandergestapelt sein.

US 5 494 690 A offenbart ein Gargerät mit einer Dampferzeugungsfunktion, wobei das Gargerät aufweist: einen Garraum, mindestens ein Heizelement zum Beheizen des Garraums, mindestens einen Lufttemperatursensor zum Bestimmen einer Lufttemperatur von in dem Garraum befindlicher Luft, mindestens ein in dem Garraum befindliches heizbares Wasserreservoir, das als eine in dem Boden des Garraums angeordnete Verdampferschale ausgestaltet ist und einen Wassertemperatursensor zum Bestimmen einer Wassertemperatur von in dem Wasserreservoir befindlichem Wasser. Es kann eine Art von Gargut ausgewählt werden, und dies legt eine Soll-Wassertemperatur fest, die in dem Wasserreservoir aufrechterhalten werden soll, um eine gewünschte Beziehung zwischen einem Dampfdruck in dem Garraum und einer Gleichgewichts-Wasseraktivität des Garguts herzustellen. Wenn während eines Betriebs die Lufttemperatur konstant gehalten werden soll, liest ein Controller liest einen Dampfdruck, die Wassertemperatur und die Lufttemperatur aus und betreibt eine Wasserheizung und eine Luftheizung, um die gewünschten Bedingungen in dem Garraum für die Zubereitung oder Lagerung des Garguts aufrechtzuerhalten.

DE 200 13 489 U1 offenbart ein Gargerät bestehend aus einem Garraum mit Dampferzeugungseinrichtung, einem Umluftgebläse mit elektrischem Antrieb, einer Abluftklappe oder sonstigen Wasserdampfverringerungseinrichtungen, gekennzeichnet durch ein Strommessgerät am elektrischen Antrieb für das Gebläserad, wobei mit Hilfe ermittelter und in der Steuerung abgespeicherter Strom-Feuchte-Beziehungen eine Garraumfeuchtigkeit aus den gemessenen Stromwerten ermittelt werden kann.

DE 10 2007 030 573 A1 offenbart ein Gargerät mit einem durch zwei Seitenwände, eine Rückwand, eine Vorderwand, eine Decke und einen Boden begrenzten und mit einem Abfluss versehenen Innenraum, der einen Garraum und zumindest einen vom Garraum un-ter Freilassung zumindest einer Ansaugöffnung und zumin-dest einer Ausblasöffnung über zumindest eine Trenneinrichtung getrennten Gebläseraum aufweist, zumindest einer Gebläseeinrichtung in dem Gebläseraum, zumindest einer Heizeinrichtung, zumindest einer Kondensationsein-richtung im Innenraum und einer Steuer- oder Regelein-richtung, wobei die Kondensationseinrichtung zumindest eine Steuer- oder regelbare Wasserzuführeinrichtung umfasst, Flüssigkeit aus der Kondensationseinrichtung über den Ablauf abfließt und die Kondensationseinrichtung in der Decke, zumindest einer Seitenwand, der Rückwand und/oder der Vorderwand zumindest teilweise integriert oder mit derselben verbunden ist; und ein Verfahren zum Entfeuchten eines Garraums solch eines Gargeräts.

US 3 245 461 A offenbart eine Vorrichtung zum Ausrechterhalten einer Temperatur und einer Feuchtigkeit in einem Luftvolumen.

Weitere Stand der Technik ist aus EP 1 658 798, und DE 20 2007 010 358 bekannt.

Es ist die **Aufgabe** der vorliegenden Erfindung, die Nachteile des Standes der Technik zumindest abzumildern und insbesondere eine Möglichkeit zur besonders nutzerfreundlichen Einstellung einer Luftfeuchtigkeit in einem Garraum eines Gargeräts bereitzustellen.

Diese Aufgabe wird gemäß den Merkmalen des unabhängigen Anspruchs 1 gelöst. Bevorzugte Ausführungsformen sind insbesondere den abhängigen Ansprüchen entnehmbar.

Die Aufgabe wird gelöst durch ein Gargerät mit einer Dampferzeugungsfunktion, wobei das Gargerät aufweist:
- einen Garraum,
- mindestens ein Heizelement zum Beheizen des Garraums,
- mindestens einen Lufttemperatursensor zum Bestimmen einer Lufttemperatur von in dem Garraum befindlicher Luft,
- mindestens ein in dem Garraum befindliches heizbares Wasserreservoir,
- einen Wassertemperatursensor zum Bestimmen einer Wassertemperatur von in dem Wasserreservoir befindlichem Wasser,
- ein Steuermittel,
wobei das Steuermittel dazu eingerichtet ist,
- eine zum Erreichen einer vorgegebenen relativen Feuchtigkeit der Luft in dem Garraum benötigte Wassertemperatur aus einer psychrometrischen Beziehung unter Verwendung der Lufttemperatur zu bestimmen und
- die Wassertemperatur auf die berechnete benötigte Wassertemperatur (insbesondere einschließlich eines daraus abgeleiteten Werts) einzustellen.

Die relative Feuchtigkeit oder relative Feuchte kann somit insbesondere bei fest vorgegebener (insbesondere einer auf einen Sollwert einregelbaren) Lufttemperatur über die Wassertemperatur eingestellt oder eingeregelt werden. Die vorgegebenen Werte oder Sollwerte der relativen Feuchtigkeit und der Lufttemperatur können beispielsweise von einem Nutzer eingegeben werden und/oder durch ein Garprogramm vorgegeben werden. Unter 'Luft' kann sowohl trockene Luft mit einer vernachlässigbaren relativen Feuchtigkeit als auch insbesondere feuchte Luft mit einer nicht vernachlässigbaren relativen Feuchtigkeit (Gemisch aus trockener Luft und Wasserdampf) verstanden werden.

Das Wasserreservoir ist ferner als eine in dem Boden des Garraums angeordnete Verdampferschale ausgestaltet. Ein solches Wasserreservoir benötigt kein für Gargut nutzbares Volumen in dem Garraum. Zudem ist die Verdampferschale zum Einfüllen von Wasser für einen Nutzer gut erreichbar. Auch weist das Wasser in der Verdampferschale aufgrund der typischerweise flachen Bauweise eine große Oberfläche auf, so dass effektiv Dampf erzeugt und schnell in den Garraum eingebracht werden kann. Darüber hinaus ist diese Ausgestaltung sehr einfach und preiswert umsetzbar.

Die psychrometrische Beziehung weist ferner eine Atmosphärendruckkorrektur auf. So kann eine Einstellung der relativen Feuchtigkeit noch genauer in Abhängigkeit von einem Aufstellort des Gargeräts durchgeführt werden, insbesondere in Abhängigkeit von einem Aufstellort des Gargeräts und/oder von Wetterverhältnissen.

Es ist eine Weiterbildung, dass die zur Bestimmung der benötigten Wassertemperatur aus der psychrometrischen Beziehung verwendete Lufttemperatur eine von dem Lufttemperatursensor gemessene oder abgefühlte Lufttemperatur ist (Ist-Wert der Lufttemperatur). Es ist noch eine Weiterbildung, dass die zur Bestimmung der benötigten Wassertemperatur aus der psychrometrischen Beziehung verwendete Lufttemperatur eine vorgegebene Lufttemperatur ist (Soll-Wert der Lufttemperatur).

Es ist noch eine Weiterbildung, dass das Gargerät dazu eingerichtet ist, zur Steuerung der relativen Feuchtigkeit des Garraums eine Lufttemperatur in dem Garraum durch eine Einstellung des Heizelements zum Beheizen des Garraums einzustellen.

Es ist außerdem eine Weiterbildung, dass die vorgegebene relative Feuchtigkeit der Luft und die in dem Garraum benötigte Wassertemperatur als Sollwerte einer entsprechenden Regelung oder Steuerung vorliegen oder verwendet werden. Auch die Lufttemperatur kann mittels einer Regelung auf einen zugehörigen Sollwert eingeregelt werden. Insbesondere können die Sollwerte für die Lufttemperatur und die relative Feuchtigkeit von einem Benutzer vorgegeben werden und der Sollwert für die Wassertemperatur daraus mittels der psychrometrischen Beziehung bestimmt werden. Das Bestimmen der benötigten Wassertemperatur kann in dem Gargerät allgemein durch eine aktuelle Berechnung, durch ein Nachschlagen in einer Nachschlagetabelle und/oder durch eine Verwendung mindestens einer Kennlinie oder Regelkurve durchgeführt werden.

Es ist eine Ausgestaltung, dass die Atmosphärendruckkorrektur anhand einer Kalibrierung mittels einer Messung eines Siedepunkts von Wasser, insbesondere von in der Verdampferschale befindlichem Wasser, durchführbar ist. Dies ermöglicht eine besonders einfache Einstellung der Atmosphärendruckkorrektur. Dabei wird ausgenutzt, dass ein Siedepunkt von Wasser mit dem daran anliegenden Druck variiert. So kann beispielsweise während der Kalibrierung das Wasserreservoir dauernd beheizt werden. Die Temperatur des Wassers in dem Wasserreservoir stabilisiert sich nach einer typischen Zeitdauer, z.B. von ca. 15 Minuten, an der Siedepunkttemperatur. Alternativ kann der Atmosphärendruck beispielsweise von einem Benutzer oder einem Servicetechniker eingegeben werden.

Es ist ferner eine Ausgestaltung, dass der Garraum mit dem Dampferzeuger unter Atmosphärendruck betreibbar ist. Dies ergibt den Vorteil, dass keine Zeit für einen Druckaufbau und Druckabbau benötigt wird und zudem keine drucktechnischen Sicherheitsvorkehrungen getroffen zu werden brauchen.

Es ist noch eine weitere Ausgestaltung, dass die Lufttemperatur in einem Temperaturbereich zwischen 30°C und 300°C einstellbar ist. Dieser Temperaturbereich ist sehr weit und eignet sich nicht nur zum Wärmebehandeln bei niedriger Temperatur wie zum Gehenlassen von Brot oder zum Dünsten von Gemüse, sondern auch für eine Gargutzubereitung bei hohen Temperaturen.

Es ist noch eine weitere Ausgestaltung, dass die relative Feuchtigkeit des Garraums in einem Bereich zwischen 0% und 100% einstellbar ist, insbesondere falls die benötigte Wassertemperatur den Siedepunkt des Wassers nicht überschreitet.

Tab.1 zeigt eine Auftragung einer einzustellenden Wassertemperatur in der Verdampferschale in Abhängigkeit von der Lufttemperatur Tl in dem Garraum in [°C] (Spalte) und der zu erreichenden relativen Feuchtigkeit RF in [%] (Zeile) für eine Lufttemperatur Tl unterhalb des Siedepunkts des Wassers W von hier beispielhaft 100°C bei einem Atmosphärendruck auf Normalnull (1013 mbar):

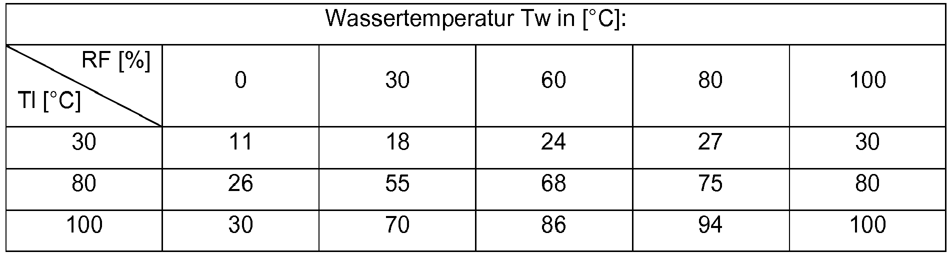

Tab.2 zeigt eine zu Tab.1 analoge Auftragung für eine Lufttemperatur Tl oberhalb des Siedepunkts, wobei in der oberen Zeile nun ein Prozentanteil einer maximal erreichbaren relativen Feuchtigkeit angegeben ist und zusätzlich eine rechte Spalte mit einer Angabe einer maximal erreichbaren relativen Feuchtigkeit vorhanden ist:

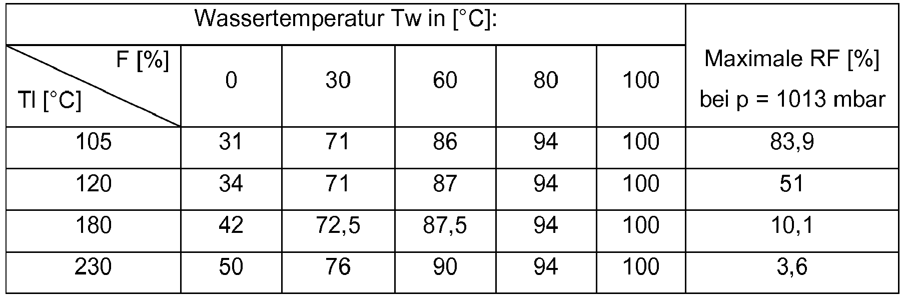

Es ist auch eine Ausgestaltung, dass der Verdampferschale eine Heizquelle zum Aufheizen des in der Verdampferschale befindlichen Wassers zugeordnet ist, welche außerhalb des Garraums angeordnet ist. Durch diese Anordnung kann die Heizquelle vor in dem Wasser gelöstem Kalk, vor in das Wasser herabtropfenden Flüssigkeiten (Öl, Soße usw.) und vor einem Reinigungsvorgang durch einen Benutzer (mechanische Beanspruchung, Reinigungsmittel) geschützt werden.

Es ist ferner eine Ausgestaltung, dass der Wassertemperatursensor die Wassertemperatur des in der Verdampferschale befindlichen Wassers mittels einer Messung einer Temperatur der Verdampferschale, insbesondere an einer dem Garraum abgewandten Seite der Verdampferschale, abfühlt. Dadurch kann eine Temperatur der Verdampferschale nahe dem Wasser abgefühlt werden, welche eine gute Näherung der Wassertemperatur darstellt. Durch diese Anordnung kann auch der Wassertemperatursensor vor in dem Wasser gelöstem Kalk, vor in das Wasser herabtropfenden Flüssigkeiten (Öl, Soße usw.) und vor einem Reinigungsvorgang durch einen Benutzer (mechanische Beanspruchung, Reinigungsmittel) geschützt werden. In dieser Ausgestaltung ist weiterhin eine Erkennung des Füllstands oder Wasserniveaus möglich, wobei eine Trägheit beispielsweise durch einen Versatz oder Offset berücksichtigt werden kann. Insbesondere kann ein Trockenfallen oder drohendes Trockenfallen erkannt werden.

Es ist eine Weiterbildung, dass die Näherung eine Temperaturkorrektur umfasst, um einen Unterschied zu der tatsächlichen Wassertemperatur zu berücksichtigen. So kann die an der dem Wasser abgewandten Seite der Verdampferschale abgefühlte Temperatur beispielsweise mit einem Versatz oder Offset versehen werden, der z.B. empirisch bestimmt sein kann und in Form einer Kennlinie vorliegen kann. Die Kennlinie kann beispielsweise eine Abhängigkeit der Temperaturdifferenz von der absoluten Temperatur, der Luftfeuchtigkeit und/oder der Wassertemperatur berücksichtigen.

Alternativ kann der Wassertemperatursensor direkt in die Verdampferschale ragen, und zwar auf der dem Garraum zugewandten Seite. Der Wassertemperatursensor kann somit in das Wasser in der Verdampferschale ragen und die Wassertemperatur direkt messen. Insbesondere bei einer solchen Anordnung des Wassertemperatursensors kann das Gargerät dazu eingerichtet sein, anhand der Sensordaten oder Messdaten des Wassertemperatursensors eine Füllstandsmessung durchzuführen. Der Wassertemperatursensor dient dann auch als ein Füllstandssensor. Dadurch kann z.B. ein Trockenfallen der Verdampferschale verhindert werden, z.B. über ein Zuführen von Wasser oder eine Ausgabe einer Warnung an den Benutzer. Beispielsweise kann ein in kurzer Zeit erfolgender, insbesondere starker, Anstieg der von dem Wassertemperatursensor gemessenen Temperatur auf ein Trockenfallen hindeuten, da ein solcher Temperaturanstieg üblicherweise bei einem Vorhandensein von Wasser durch dessen Wärmekapazität unterdrückt wird. Jedoch ist auch jede andere geeignete Füllstandsmessmethode einsetzbar.

Es ist außerdem eine Ausgestaltung, dass das Gargerät dazu eingerichtet ist, für eine Verminderung einer relativen Feuchtigkeit in dem Garraum eine Öffnung des Garraums freizugeben, insbesondere wenn ein Garraumgebläse aktiviert ist. Durch die Öffnung kann gezielt ein erheblicher Teil der Luft aus dem Garraum innerhalb kurzer Zeit herausbefördert werden, was durch die Arbeit des Garraumgebläses unterstützt wird. Andererseits mag die Öffnung für eine genaue und schnelle Regelung der relativen Feuchtigkeit nur kurzzeitig freigegeben werden. Ein Verschluss der Öffnung ist mit vielen, auch preiswerten Mitteln erreichbar, z.B. mittels einer elektrisch gesteuerten Klappe. Das Garraumgebläse kann z.B. einen Teil einer Umluftheizung darstellen.

Es ist noch eine Ausgestaltung, dass das Gargerät dazu eingerichtet ist, für eine Verminderung einer relativen Feuchtigkeit in dem Garraum kühles Wasser auf mindestens eine dem Garraum ausgesetzte Wand aufzubringen. Eine solche Wand kann z.B. eine Garraumwand oder Muffel sein, welche z.B. auf ihrer dem Garraum zugewandten Seite und/oder auf ihrer dem Garraum abgewandten Seite mit Wasser benetzt, z.B. bespritzt oder bespült, werden kann. Zusätzlich oder alternativ kann die Wand eine innerhalb des Garraums untergebrachte oder aufgestellte Wand sein, z.B. ein senkrecht oder schräg stehender Raumteiler oder eine Abdeckung. Durch das Benetzen der mindestens einen Wand mit dem Wasser wird diese abgekühlt und kann als eine, insbesondere großflächige, Kondensierungsfläche für in der Luft gelöste Feuchtigkeit dienen, so dass die Feuchtigkeit in der Luft des Garraums auf eine einfache und preiswerte Weise verringert werden kann.

Es ist insbesondere eine Ausgestaltung, dass das Gargerät dazu eingerichtet ist, dass das Wasser, welches auf die dem Garraum ausgesetzte Wand aufgebracht wird, in die Verdampferschale abläuft. So können in einem Vorgang sowohl die relative Feuchtigkeit der Luft gesenkt als auch die Temperatur des Wassers in der Verdampferschale herabgesetzt werden. Durch die niedrigere Temperatur des Wassers in der Verdampferschale kann ein sofortiges Nachführen von Wasserdampf unterdrückt werden, was eine Feuchtigkeitsregelung oder -steuerung vereinfacht und noch effektiver gestaltet.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.1: zeigt eine Skizze eines Gargeräts;
- Fig.2: zeigt das Gargerät in einer höheren Detaillierung.

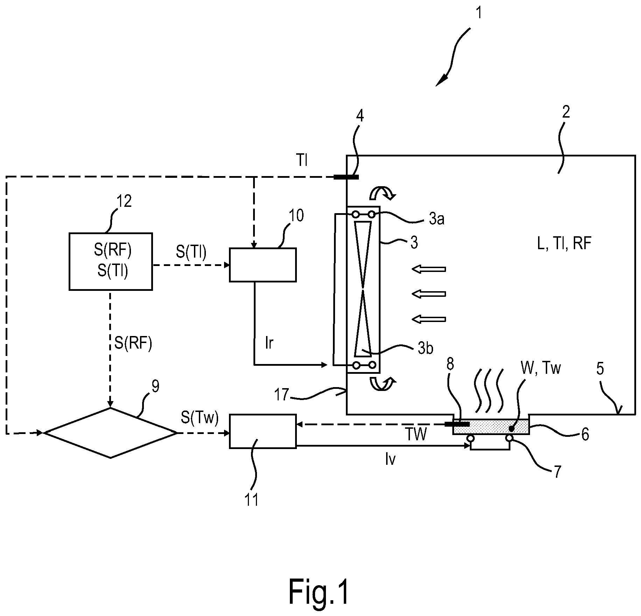

**Fig.1** zeigt ein Gargerät 1 mit einem Garraum 2, an dessen Rückwand 17 sich eine Umluftheizung 3 befindet. Die Umluftheizung 3 weist sowohl ein Heizelement in Form einer Ringheizung 3a als auch ein Umluftgebläse 3b auf, um Luft aus dem Garraum 2 anzusaugen und stärker erwärmt wieder in den Garraum 2 zurückzublasen. Die Umluftheizung 3 dient somit sowohl zum Beheizen des Garraums 2 als auch zum Umwälzen der Luft L in dem Garraum 2, wie durch die offenen Pfeile angedeutet. Das Gargerät 1 weist ferner einen Lufttemperatursensor 4 zum Bestimmen oder Messen einer Lufttemperatur Tl der Luft L in dem Garraum 2 ('Garraumtemperatur'). Die Luft L ist typischerweise eine Mischung aus trockener Luft (als einem Gas) und Wasserdampf und weist entsprechend eine relative Feuchte oder relative Feuchtigkeit RF auf. In einem Boden 5 des Garraums 2 ist ein Wasserreservoir in Form einer flachen Verdampferschale 6 eingelassen. An ihrer dem Garraum 2 abgewandten Seite ist die Verdampferschale 6 mit einem Verdampferschalenheizelement 7, z.B. einer Dickschichtwiderstandsheizung, ausgestattet, so dass die Verdampferschale 6 aktiv heizbar ist. Das Gargerät 1 weist ferner einen Wassertemperatursensor 8 zum Bestimmen oder Messen einer Wassertemperatur Tw von in der Verdampferschale 6 befindlichem Wasser W auf. Die relative Feuchtigkeit RF und die Lufttemperatur Tl können beispielsweise als Sollwerte S(RF) bzw. S(Tl) durch einen Benutzer direkt oder von einem Garprogramm als Einstellwerte vorgegeben werden, z.B. gespeichert in einem Speicher 12.

Die Lufttemperatur Tl kann beispielsweise mittels einer Lufttemperaturregelung 10 auf ihren Sollwert S(Tl) eingeregelt werden. Dazu ist die Lufttemperaturregelung 10 mit dem Speicher 12 verbunden. Die Lufttemperaturregelung 10 nutzt die Sensordaten des Lufttemperatursensors 4, welche für die Lufttemperatur Tl repräsentativ sind, als Eingangsgröße oder Messgröße und beispielsweise einen Strom Ir durch die Ringheizung 3a und/oder eine Umdrehungszahl des Umluftgebläse 3b der Umluftheizung 3 als Stellgröße(n).

Das Gargerät 1 weist ferner ein Steuermittel 9, z.B. eine Steuerlogik, zur Steuerung oder Regelung der relativen Feuchtigkeit RF des Garraums 2 auf. Das Steuermittel 9 kann beispielsweise eine zentrale Steuerung oder Steuergerät des Gargeräts 1 oder ein, insbesondere funktionaler, Teil davon sein. Dabei wird die gemessene Lufttemperatur Tl zusammen mit dem Sollwert S(RF) für die relative Feuchtigkeit RF dem Steuermittel 9 zugeführt, welches daraus mittels einer psychrometrischen Beziehung eine benötigte Soll-Wassertemperatur S(Tw) berechnet. Die berechnete Soll-Wassertemperatur S(Tw) kann einer Wassertemperaturregelung 11 zur Steuerung oder Regelung der Wassertemperatur Tw zugeführt werden. Die Wassertemperaturregelung 11 wiederum nutzt die Sensordaten des Wassertemperatursensors 8, welche für die Wassertemperatur Tw repräsentativ sind, als Eingangsgröße oder Messgröße und beispielsweise einen Strom Iv durch das Verdampferschalenheizelement 7 als eine Stellgröße.

Das Gargerät 1 kann unter Atmosphärendruck bis auf ca. 230 °C aufgeheizt werden und zumindest bis zu einer Temperatur entsprechend dem Siedepunkt des Wassers W die relative Feuchtigkeit RF zwischen 0% und 100% einstellen. Das Gargerät 1 führt zur genaueren Bestimmung der zum Erreichen des gewünschten Sollwerts (S(RF) der relativen Feuchtigkeit RF benötigten Soll-Wassertemperatur S(Tw) eine Atmosphärendruckkorrektur durch.

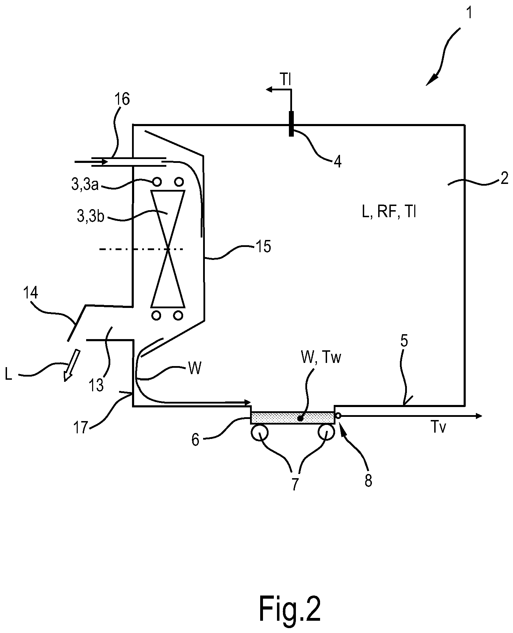

**Fig.2** zeigt das Gargerät 1 in einer höheren Detaillierung.

Der Wassertemperatursensor 8 ist außerhalb des Garraums 2 an der dem Wasser W abgewandten Seite der Verdampferschale 6 angeordnet. Der Wassertemperatursensor 8 misst die Wassertemperatur Tw somit nicht direkt, sondern mittels einer Messung einer Temperatur Tv der Verdampferschale 6. Um mögliche Abweichungen zu einer direkten Messung der Wassertemperatur Tw gering zu halten, kann die von dem Wassertemperatursensor 8 abgefühlte Temperatur Tv mit einem, z.B. temperaturabhängigen, Temperaturversatz oder Offset O versehen werden, d.h., Tw = Tv + O. Der Temperaturversatz O kann z.B. empirisch ermittelt und in einer Nachschlagetabelle oder einer Kennlinie hinterlegt sein, insbesondere, falls der Temperaturversatz O selbst temperaturabhängig ist, d.h., O = O(T).

Das Gargerät 1 weist ferner eine an der Rückwand 17 des Garraums 2 hinter der Umluftheizung 3 gelegene Öffnung 13 auf, welche mittels einer Klappe 14 wahlweise öffenbar und verschließbar ist. Das Öffnen der Klappe 14 ist durch das Gargerät 1 steuerbar, z.B. über einen entsprechenden Motor. Bei geöffneter Klappe 14 kann feuchte Luft L aus dem Garraum 2 entweichen, so dass dort die relative Feuchtigkeit RF sinkt. Durch das Öffnen der Klappe 14 in Kombination mit einer Einstellung der Wassertemperatur Tw lässt sich also die relative Feuchtigkeit RF im Garraum 2 einstellen. Der Volumenstrom der feuchten Luft L aus dem Garraum 2 kann vergrößert werden, wenn das Umluftgebläse 3b eingeschaltet ist.

Das Gargerät 1 weist ferner eine innerhalb des Garraums 2 stehende und damit dem Garraum 2 allseitig ausgesetzte Wand 15 auf, welche z.B. eine Prallwand der Umluftheizung 3 sein kann. Durch Aufbringen von Wasser W auf die Wand 15, z.B. durch eine durch die Rückwand 17 geführte Wasserzufuhr 16, kühlt die Wand 15 ab. Dadurch kondensiert der in der feuchten Luft L in dem Garraum 2 befindliche Wasserdampf an der Wand 15 zumindest teilweise und tropft davon herab. Das Wasser W wird hier auf eine einem Gargut abgewandte rückwärtige Seite der Wand 15 aufgebracht, so dass Gargut nicht ungewollt gewässert wird. Anstelle der Prallwand kann die Wand 15 auch eine separate, der Prallwand vorgelagerte Wand 15 sein.

Das Gargerät 1 kann so ausgestaltet sein, dass das auf die Wand 15 aufgebrachte und das davon abtropfende kondensierte Wasser W zumindest teilweise in die Verdampferschale 6 abläuft, wie durch den linienförmigen Pfeil angedeutet. Dazu kann der Boden 18 des Garraums 2 z.B. mit Ablaufrinnen o.ä. ausgestaltet sein. Durch eine Aufnahme des (Kühl-)Wassers W in die Verdampferschale kann dort die Wassertemperatur Tw gesenkt werden, was einen schnellen Anstieg der relativen Feuchtigkeit RF in dem Garraum 2 unterdrückt und so eine Regelung der relativen Feuchtigkeit RF vereinfachen kann.

Das auf die Wand 15 aufgebrachte und das daran kondensierte Wasser W kann auch über einen, insbesondere gezielt öffenbaren und verschließbaren, Abfluss (o.Abb.) zumindest zeitweise abgeleitet werden, bevor das Wasser W die Verdampferschale 6 erreicht. So kann ein Überlaufen der Verdampferschale 6 und/oder dessen zu starke Abkühlung verhindert werden.

Selbstverständlich ist die vorliegende Erfindung nicht auf die gezeigten Ausführungsbeispiele beschränkt.

So kann der Wassertemperatursensor auch in der Verdampferschale innerhalb des Garraums angeordnet sein, um die Wassertemperatur direkt zu messen.

Die Öffnung mag z.B. auch mittels eines anderen Verschlusselements als der Klappe verschließbar sein, z.B. mittels eines Hahns oder Ventils.

### Bezuaszeichenliste

- 1: Gargerät
- 2: Garraum
- 3: Umluftheizung
- 3a: Ringheizung
- 3b: Umluftgebläse
- 4: Lufttemperatursensor
- 5: Boden
- 6: Verdampferschale
- 7: Verdampferschalenheizelement
- 8: Wassertemperatursensor
- 9: Steuermittel
- 10: Lufttemperaturregelung
- 11: Wassertemperaturregelung
- 12: Speicher
- 13: Öffnung
- 14: Klappe
- 15: Wand
- 16: Wasserzufuhr
- 17: Rückwand
- 18: Boden
- L: Luft
- RF: relative Feuchtigkeit
- Tl: Temperatur der Luft
- Tw: Temperatur des Wassers
- W: Wasser
- Iv: Strom
- S: Sollwert
- Tv: Temperatur der Verdampferschale
- O: Temperaturversatz

## Patentansprüche

1. Gargerät (1) mit einer Dampferzeugungsfunktion, wobei das Gargerät (1) aufweist:
- einen Garraum (2),
- mindestens ein Heizelement (3a) zum Beheizen des Garraums (2),
- mindestens einen Lufttemperatursensor (4) zum Bestimmen einer Lufttemperatur (Tl) von in dem Garraum (2) befindlicher Luft (L),
- mindestens ein in dem Garraum (2) befindliches heizbares Wasserreservoir (6), das als eine in dem Boden (5) des Garraums (2) angeordnete Verdampferschale ausgestaltet ist,
- einen Wassertemperatursensor (8) zum Bestimmen einer Wassertemperatur (Tw) von in dem Wasserreservoir (6) befindlichem Wasser (W)
- ein Steuermittel (9)
wobei das Steuermittel (9) dazu eingerichtet ist,
- eine zum Erreichen einer vorgegebenen relativen Feuchtigkeit (RF) der Luft (L) in dem Garraum (2) benötigte Wassertemperatur (S(Tw)) aus einer psychrometrischen Beziehung unter Verwendung der Lufttemperatur (Tl) zu bestimmen und
- die Wassertemperatur (Tw) auf die berechnete benötigte Wassertemperatur (S(Tw)) einzustellen,
**dadurch gekennzeichnet, dass**
- die psychrometrische Beziehung eine Atmosphärendruckkorrektur aufweist.

2. Gargerät (1) nach Anspruch 1, **dadurch gekennzeichnet, dass** die Atmosphärendruckkorrektur anhand einer Kalibrierung mittels einer Messung eines Siedepunkts von Wasser, insbesondere von in der Verdampferschale (6) befindlichem Wasser (W), durchführbar ist.

3. Gargerät (1) nach einem der vorhergehenden Ansprüche, **dadurch gekennzeichnet, dass** das Steuermittel (9)
- eine Wassertemperaturregelung (11) zur Steuerung oder Regelung der Wassertemperatur (Tw) auf die berechnete Soll-Wassertemperatur (S(Tw)) aufweist, wobei
- die von dem Steuermittel (9) berechnete Soll-Wassertemperatur S(Tw) der Wassertemperaturregelung (11) zuführbar ist.

4. Gargerät (1) nach einem der vorhergehenden Ansprüche, **dadurch gekennzeichnet, dass** der Garraum (2) mit der Dampferzeugungsfunktion unter Atmosphärendruck betreibbar ist.

5. Gargerät (1) nach einem der vorhergehenden Ansprüche, **dadurch gekennzeichnet, dass** die Lufttemperatur (Tl) in einem Bereich zwischen 30°C und 300°C einstellbar ist.

6. Gargerät (1) nach einem der vorhergehenden Ansprüche, **dadurch gekennzeichnet, dass** die relative Feuchtigkeit (RF) in einem Bereich zwischen 0% und 100% einstellbar ist.

7. Gargerät (1) nach einem der vorhergehenden Ansprüche, **dadurch gekennzeichnet, dass** der Verdampferschale (6) eine Heizquelle (7) zum Aufheizen des in der Verdampferschale (6) befindlichen Wassers (W) zugeordnet ist, welche außerhalb des Garraums (2) angeordnet ist.

8. Gargerät (1) nach einem der vorhergehenden Ansprüche, **dadurch gekennzeichnet, dass** der Wassertemperatursensor (8) die Wassertemperatur (Tw) mittels einer Messung einer Temperatur (Tv) der Verdampferschale (6), insbesondere an einer dem Garraum (W) abgewandten Seite der Verdampferschale (6), abfühlt.

9. Gargerät (1) nach einem der vorhergehenden Ansprüche, **dadurch gekennzeichnet, dass** das Gargerät (1) dazu eingerichtet ist, für eine Verminderung einer relativen Feuchtigkeit (RF) in dem Garraum (2) eine Öffnung (13) des Garraums (2) freizugeben, insbesondere wenn ein Garraumgebläse (3b) aktiviert ist.

10. Gargerät (1) nach einem der vorhergehenden Ansprüche, **dadurch gekennzeichnet, dass** das Gargerät (1) dazu eingerichtet ist, für eine Verminderung einer relativen Feuchtigkeit (RF) in dem Garraum kühles Wasser (W) auf mindestens eine dem Garraum (2) ausgesetzte Wand (15) aufzubringen.

11. Gargerät (1) nach Anspruch 10, **dadurch gekennzeichnet, dass** das Gargerät dazu eingerichtet ist, dass das auf die dem Garraum (2) ausgesetzte Wand (15) aufgebrachte Wasser (W) in die Verdampferschale (6) abläuft.

## Claims

1. Cooking device (1) with a steam generation function, with the cooking device (1) having:
- a cooking compartment (2),
- at least one heating element (3a) for heating up the cooking compartment (2),
- at least one air temperature sensor (4) for determining an air temperature (Tl) of air (L) to be found in the cooking compartment (2),
- at least one heatable water reservoir (6) which is located in the cooking compartment (2) and is embodied as an evaporator tray arranged in the floor (5) of the cooking compartment (2),
- a water temperature sensor (8) for determining a water temperature (Tw) of water (W) located in the water reservoir (6),
- a control means (9),
with the control means (9) being configured
- to determine a water temperature (S(Tw)) needed to reach a predetermined relative humidity (RF) of the air (L) in the cooking compartment (2) from a psychrometric relationship using the air temperature (Tl), and
- to set the water temperature (Tw) to the computed required water temperature (S(Tw)),
**characterised in that**
- the psychrometric relationship involves an atmospheric pressure correction.

2. Cooking device (1) according to claim 1, **characterised in that** the atmospheric pressure correction can be carried out on the basis of a calibration by means of a measurement of a boiling point of water, especially of water (W) to be found in the evaporator tray (6).

3. Cooking device (1) according to one of the preceding claims, **characterised in that** the control means (9)
- has a water temperature regulator (11) for controlling or regulating the water temperature (Tw) to the computed setpoint water temperature (S(Tw)), wherein
- the computed setpoint water temperature (S(Tw)) can be fed to the water temperature regulator (11) by the control means (9).

4. Cooking device (1) according to one of the preceding claims, **characterised in that** the cooking compartment (2) can be operated with the steam generation function under atmospheric pressure.

5. Cooking device (1) according to one of the preceding claims, **characterised in that** the air temperature (Tl) can be adjusted in a range between 30°C and 300°C.

6. Cooking device (1) according to one of the preceding claims, **characterised in that** the relative humidity (RF) can be adjusted within a range between 0% and 100%.

7. Cooking device (1) according to one of the preceding claims, **characterised in that** the evaporator tray (6) is assigned a heating source (7) for heating up the water (W) to be found in the evaporator tray (6), which is arranged outside the cooking compartment (2).

8. Cooking device (1) according to one of the preceding claims, **characterised in that** the water temperature sensor (8) senses the water temperature (Tw) by means of a measurement of a temperature (Tv) of the evaporator tray (6), especially on a side of the evaporator tray (6) facing away from the cooking compartment (W).

9. Cooking device (1) according to one of the preceding claims, **characterised in that** the cooking device (1) is configured to release an opening (13) of the cooking compartment (2) to reduce a relative humidity (RF) in the cooking compartment (2), especially when a cooking compartment fan (3b) is activated.

10. Cooking device (1) according to one of the preceding claims, **characterised in that** the cooking device (1) is configured to apply cool water (W) to at least one wall (15) exposed to the cooking compartment (2) for a reduction in a relative humidity (RF) in the cooking compartment.

11. Cooking device (1) according to claim 10, **characterised in that** the cooking device is configured so that the water (W) applied to the wall (15) exposed to the cooking compartment (2) runs off into the evaporator tray (6).

## Revendications

1. Appareil de cuisson (1) doté d'une fonction de production de vapeur, l'appareil de cuisson (1) présentant :
- un espace de cuisson (2),
- au moins un élément de chauffage (3a) destiné à chauffer l'espace de cuisson (2),
- au moins un capteur de température d'air (4) destiné à déterminer une température d'air (Tl) de l'air (L) se trouvant dans l'espace de cuisson (2),
- au moins un réservoir d'eau (6) pouvant être chauffé, se trouvant dans l'espace de cuisson (2), lequel réservoir d'eau est conçu comme un bac d'évaporation disposé dans le fond (5) de l'espace de cuisson (2),
- un capteur de température d'eau (8) destiné à déterminer une température d'eau (Tw) de l'eau (W) se trouvant dans le réservoir d'eau (6),
- un moyen de commande (9),
le moyen de commande (9) étant configuré
- pour déterminer une température d'eau (S (Tw)) nécessaire pour obtenir une humidité (RF) relative prédéfinie de l'air (L) dans l'espace de cuisson (2) à partir d'un rapport psychométrique en utilisant la température de l'air (Tl), et
- pour régler la température d'eau (Tw) à la température d'eau (S (Tw)) nécessaire calculée,
**caractérisé en ce que**
- le rapport psychométrique présente une correction de la pression atmosphérique.

2. Appareil de cuisson (1) selon la revendication 1, **caractérisé en ce que** la correction de pression atmosphérique est réalisable à l'aide d'un calibrage au moyen d'une mesure d'un point d'ébullition de l'eau, notamment de l'eau (W) se trouvant dans le bac d'évaporation (6).

3. Appareil de cuisson (1) selon l'une quelconque des revendications précédentes, **caractérisé en ce que** le moyen de commande (9) présente
- un dispositif de réglage de température d'eau (11) pour la commande ou le réglage de la température d'eau (Tw) à la température d'eau théorique (S(Tw)) calculée,
- la température d'eau théorique S(Tw) calculée par le moyen de commande (9) pouvant être amenée au dispositif de réglage de température d'eau (11).

4. Appareil de cuisson (1) selon l'une quelconque des revendications précédentes, **caractérisé en ce que** l'espace de cuisson (2) peut être exploité avec la fonction de production de vapeur sous pression atmosphérique.

5. Appareil de cuisson (1) selon l'une quelconque des revendications précédentes, **caractérisé en ce que** la température d'air (Tl) est réglable dans une plage comprise entre 30°C et 300°C.

6. Appareil de cuisson (1) selon l'une quelconque des revendications précédentes, **caractérisé en ce que** l'humidité relative (RF) est réglable dans une plage comprise entre 0% et 100%.

7. Appareil de cuisson (1) selon l'une quelconque des revendications précédentes, **caractérisé en ce qu'**une source de chauffage (7) destinée à échauffer l'eau (W) se trouvant dans le bac d'évaporation (6) est associée au bac d'évaporation (6), laquelle est disposée en dehors de l'espace de cuisson (2).

8. Appareil de cuisson (1) selon l'une quelconque des revendications précédentes, **caractérisé en ce que** le capteur de température d'eau (8) détecte la température d'eau (Tw) au moyen d'une mesure d'une température (Tv) du bac d'évaporation (6), notamment sur un côté du bac d'évaporation (6), détourné de l'espace de cuisson (W).

9. Appareil de cuisson (1) selon l'une quelconque des revendications précédentes, **caractérisé en ce que** l'appareil de cuisson (1) est configuré pour libérer une ouverture (13) de l'espace de cuisson (2) pour une réduction d'une humidité relative (RF) dans l'espace de cuisson (2), notamment lorsqu'un ventilateur (3b) d'espace de cuisson est activé.

10. Appareil de cuisson (1) selon l'une quelconque des revendications précédentes, **caractérisé en ce que** l'appareil de cuisson (1) est configuré pour appliquer de l'eau (W) froide sur au moins une paroi (15) exposée à l'espace de cuisson (2) pour une réduction d'une humidité relative (RF) dans l'espace de cuisson.

11. Appareil de cuisson (1) selon la revendication 10, **caractérisé en ce que** l'appareil de cuisson est configuré pour que l'eau (W) appliquée sur la paroi (15) exposée à l'espace de cuisson (2) s'écoule dans le bac d'évaporation (6).
